# EUROPÄISCHE PATENTSCHRIFT

(11) **EP 4 017 711 B1**
(45) Veröffentlichungstag und Bekanntmachung des Hinweises auf die Patenterteilung: **17.12.2025**
(21) Anmeldenummer: 20753302.7
(22) Anmeldetag: 29.07.2020
(51) Int. Cl.: B29C 70/44, B21D 26/031, B29C 33/04, B29C 33/12, B29C 35/02, B29C 35/04, B30B 1/00, B29D 99/00, B29C 33/30

(54) **VERFAHREN UND VORRICHTUNG ZUM ERZEUGEN EINES BAUELEMENTS**
METHOD AND DEVICE FOR PRODUCING A STRUCTURAL COMPONENT
PROCÉDÉ ET DISPOSITIF DE PRODUCTION D'UN COMPOSANT STRUCTURAL

(30) Priorität: 22.08.2019 DE 102019005909
(43) Veröffentlichungstag der Anmeldung: 29.06.2022
(73) Patentinhaber: Siempelkamp Maschinen- und Anlagenbau GmbH, 47803 Krefeld (DE)
(72) Erfinder: KÖFFERS, Fabian, 47807 Krefeld (DE); SCHÖLER, Michael, 47509 Rheurdt (DE); SCHÜRMANN, Klaus, 41363 Jüchen (DE); SEBASTIAN, Lothar, 47239 Duisburg (DE)
(74) Vertreter: Keil & Schaafhausen Patentanwälte PartGmbB
(86) Internationale Anmeldenummer: PCT/EP2020/071406
(87) Internationale Veröffentlichungsnummer: WO 2021/032429

(56) Entgegenhaltungen:
- EP-A1- 0 446 851
- EP-A1- 2 835 252
- EP-A1- 3 072 661
- EP-A2- 2 203 288
- EP-B1- 0 446 851
- EP-B1- 2 203 288
- US-A- 4 388 263
- US-A- 5 190 773
- US-A1- 2012 258 276

## Beschreibung

Die Erfindung betrifft ein Verfahren zum Erzeugen eines Bauelements, insbesondere eines Luft-, Land- oder Wasserfahrzeugs oder eines Rotorblatts einer Windenergieanlage nach dem Oberbegriff des Anspruchs 1.

Ferner betrifft die Erfindung eine Vorrichtung zum Erzeugen eines Bauelements, insbesondere eines Luft-, Land- oder Wasserfahrzeugs oder eines Rotorblatts einer Windenergieanlage nach dem Oberbegriff des Anspruchs 11.

DE 10 2017 113 595 A1 offenbart ein Verfahren zum Herstellen eines Bauteils aus einem Faserverbundwerkstoff mit dem Schritt Einbringen einer mit einer Matrix imprägnierten Faser auf eine zylinderartige Innenform eines zwischen der Innenform und einer zylinderartigen Außenform gebildeten Formraums.

Wenn man die Anordnung aus Fasern und Kunststoff mit erhöhtem Druck und erhöhter Temperatur beaufschlagt, schmilzt der Kunststoff auf und bildet dann ein "Haut", die durch einen faserverstärkten Kunststoff gebildet ist. Eine derartige Haut oder Wand kann man als Karosserieelement für eines der oben genannten Fahrzeuge verwenden. Wenn diese Haut beispielsweise als Halbschale ausgebildet ist, dann kann man zwei derartige Halbschalen verwenden, um einen Rumpf oder eine Kabine eines Flugzeugs oder eines anderen Fahrzeugs zu bauen.

Das Verstärkungselement, das vielfach auch als "Stringer" bezeichnet wird, dient zur Verstärkung der Haut, insbesondere zur Versteifung. Das Verstärkungselement ist in der Regel ebenfalls aus Fasern und Kunststoff gebildet.

Wenn man nun die Anordnung aus Fasern und Kunststoff in der Form mit erhöhtem Druck und erhöhter Temperatur beaufschlagt, um die Haut zu bilden, dann schmilzt nicht nur der Kunststoff der Anordnung auf, sondern auch das Verstärkungselement wird mit einer höheren Temperatur beaufschlagt. Es erfährt dadurch eine Temperaturerhöhung, die bis zu einem Erweichen oder sogar Schmelzen des Kunststoffs des Verstärkungselements führen kann. Dies ist unkritisch, solange die Form der Ausnehmung der Form des Verstärkungselements entspricht.

WO 2009/037647 A2 zeigt ein Verfahren zum Herstellen eines gekrümmten Strukturelements aus einem Komposit-Material. Das Strukturelement ist hier aus drei Teilen zusammengesetzt, die in einer Form miteinander verbunden werden. Die Form weist eine ebene Grundfläche auf, auf der ein erstes Werkzeug aufgestellt ist. Ein zweites Werkzeug, das expandierbar ist, befindet sich ebenfalls auf der Grundfläche. Die drei Elemente werden zusammengesetzt. Eine Vakuumfolie wird über die Anordnung gelegt und ein Unterdruck wird erzeugt, so dass die drei Elemente zusammengedrückt werden. Das expandierbare Werkzeug wird hierbei unter einen Innendruck gesetzt und erzeugt eine nach aussen gerichtete Kraft.

EP 0 446 851 A1 zeigt eine Form zum Bilden von Strukturen aus Komposit-Materialien. Hier ist eine Form vorgesehen, in der ein T-förmiges Element zwischen zwei Spannbacken angeordnet wird. Die Spannbacken werden durch Keile aufeinander zu bewegt, wenn durch einen Stempel eine Presskraft aufgebracht wird, die über eine Platte auf die Schenkel des T-förmigen Elements wirken.

US 2012/0258276 A zeigt ein Verfahren und eine Vorrichtung zum Herstellen von konturierten Komposit-Versteifungselementen.

US 5 190 773 A zeigt eine Form zum Herstellen von Komposit-Gegenständen, bei der zwei Spannbacken vorgesehen sind, die durch Keile aufeinander zu bewegt werden können, um Prepreg-Laminate zusammenpressen zu können. In mindestens einer Spannbacke ist eine Kammer vorgesehen, in der ein Druckpolster angeordnet werden kann. Das Druckpolster soll einen Wärmeausdehnungskoeffizienten aufweisen, der größer ist als der Wärmeausdehnungskoeffizient der übrigen Teile, so dass sich beim Aufbringen einer erhöhten Temperatur auch ein erhöhter Pressdruck ergibt.

EP 2 835 252 A1 zeigt ein weiteres Werkzeug zum Herstellen von hochintegrierten Komposit-Strukturen. Auch hier wird eine Form verwendet, die aus mehreren Kernen besteht, um ein Teil zu erzeugen, das aus einer Haut und einem Verstärkungselement zusammengesetzt ist. Das Verstärkungselement wird wiederum durch Werkstückelemente gebildet, die durch Drücke in dem Werkzeug erzeugt werden können.

US 4 388 263 A zeigt ein Werkzeug zum Herstellen von Elementen aus einem faserverstärkten Kunstharz. Die Elemente werden durch einen elastomeren Block gegen einen Reaktionsblock gedrückt, wobei der Block einen positiven Temperaturausdehnungskoeffizienten hat.

EP 3 072 661 A1 zeigt eine weitere Form zum Erzeugen eines Elements aus Komposit-Material, bei der Elemente vorgesehen sind, die von innen unter Druck gesetzt werden können.

Der Erfindung liegt die Aufgabe zugrunde, gewisse Freiheiten bei der Wahl eines Verstärkungselements zu haben.

Diese Aufgabe wird mit den Merkmalen des Anspruchs 1 gelöst.

Man lässt also eine gewisse Kraft auf das Verstärkungselement wirken, die das Verstärkungselement gegen die Wand der Ausnehmung drückt und es auf der der Wand gegenüberliegenden Seite abstützt. Damit wird verhindert, dass sich das Verstärkungselement über ein gewisses Maß hinaus verformen kann. Die Materialien für die Haut und für das Verstärkungselement können dabei gleich oder gleichartig ausgebildet sein. Insbesondere kann man als Faser Kohlefasern oder andere hoch zugbeanspruchbare Fasern verwenden. Als Kunststoff wird vorzugsweise ein thermoplastischer Kunststoff verwendet, insbesondere Polyamid, beispielsweise PA6. Die Verwendung von gleichen Materialien für die Haut und das Verstärkungselement ist aber nicht zwingend.

Man legt ein Verstärkungselement und einen Kern in die Ausnehmung ein, wobei man eine Form verwendet, die eine auf den Kern wirkende

Spanneinrichtung aufweist. Die Spanneinrichtung muss dabei nicht einstückig mit dem Kern ausgebildet sein. Sie kann auch in die Form eingelegt werden. Die Spanneinrichtung übt dann eine Spannkraft auf den Kern aus. Der Kern wiederum drückt auf das Verstärkungselement und hält es in Anlage an der Wand der Ausnehmung, so dass eine Verformung des Verstärkungselements verhindert werden kann oder eine derartige Verformung nur bis zu einem zulässigen Maß auftreten kann. Dabei trägt man der Tatsache Rechnung, dass man in vielen Fällen Verstärkungselemente oder "Stringer" verwendet, die als Halbzeug erhältlich sind. Derartige Stringer haben eine relativ große Toleranz, d.h. ihre Außenabmessungen unterscheiden sich merklich um mehrere Prozent. Auch bei relativ großen Unterschieden zwischen den einzelnen Stringern kann man die gleiche Form verwenden. Die Toleranzen werden durch die Spanneinrichtung aufgenommen.

Vorzugsweise verwendet man eine Spanneinrichtung, die über die Länge des Kerns auf den Kern wirkt. Das so erzeugte Bauelement kann eine relativ große Länge haben, die beispielsweise bis zu 30 m betragen kann. Auch bei kürzeren Längen von beispielsweise 2 m oder weniger ist es von Vorteil, wenn das Verstärkungselement über seine gesamte Länge die gewünschte Form erhält oder behalten kann. Dementsprechend kann die Spanneinrichtung über die Länge des Kerns auf den Kern wirken. Dies muss nicht kontinuierlich erfolgen. In Abhängigkeit von der Steifigkeit des Kerns reicht es aus, wenn die Spanneinrichtung in gewissen Abständen eine Spannkraft auf den Kern ausübt.

Vorzugsweise verwendet man eine Spanneinrichtung, deren Position in der Ausnehmung festgelegt ist. Damit ergeben sich definierte Angriffspunkte der Kraft auf den Kern, so dass man die auf das Verstärkungselement wirkende Spannkraft definiert einstellen kann.

Bevorzugterweise verwendet man eine Spanneinrichtung mit einer ersten Geometrie und eine Ausnehmung mit einer zweiten Geometrie, wobei die erste Geometrie und die zweite Geometrie aneinander angepasst sind und die Position der Spanneinrichtung in der Ausnehmung definieren. Dies ist eine relativ einfache Ausgestaltung, um die Position der Spanneinrichtung in der Ausnehmung festzulegen.

Hierbei ist bevorzugt, dass zumindest eine der beiden Geometrien eine Vertiefung aufweist, in der die andere Geometrie zumindest teilweise angeordnet ist. Die andere Geometrie kann dann eine gewisse Länge in eine Richtung senkrecht zum Kern aufweisen.

Vorzugsweise verwendet man als Spanneinrichtung mindestens ein Federelement, das zwischen der Form und dem Kern angeordnet ist. Ein derartiges Federelement kann beispielsweise an der oben genannten Vertiefung angeordnet sein.

Vorzugsweise ist das Federelement als textiles Material aus einem hitzebeständigen Werkstoff ausgebildet. Das textile Material kann ein Gewebe, ein Gewirke, ein Vlies oder einfach ein "Knäuel", also ein ungeordnetes "Durcheinander" von metallischen Fäden oder Fäden aus einem anderen elastischen und hitzebeständigen Werkstoff sein. Es wird zusammengepresst, wenn man die Anordnung aus Fasern und Kunststoff mit Druck beaufschlagt und gleicht dadurch Toleranzen in dem Verstärkungselement aus.

Alternativ dazu kann das Federelement als Blatt-, Wellen- oder Tellerfeder ausgebildet sein. Auch damit lassen sich die gewünschten Spannkräfte erzeugen. Man kann auch unterschiedliche Arten von Federelementen miteinander kombinieren.

Vorzugsweise verwendet man eine Spanneinrichtung mit mehreren Federelementen, die über die Länge des Kerns verteilt angeordnet sind. Damit lassen sich über die Länge des Kerns verteilt an mehreren Positionen Kräfte auf den Kern aufbringen, so dass der Kern über seine gesamte Länge in der Lage ist, mit einer gewissen Spannkraft auf das Verstärkungselement zu wirken.

Für die Durchführung eines derartigen Verfahrens kann man beispielsweise eine Form verwenden, in die man Prepregs einlegt. Als Prepregs kann man beispielsweise unidirektionale Prepregs verwenden, also Prepregs, bei denen Kohlefasern oder andere Verstärkungsfasern, wie beispielsweise Glasfasern, alle in der gleichen Richtung verlaufen. Alternativ dazu kann man auch Prepregs verwenden, bei denen Verstärkungsfasern in unterschiedlichen Richtungen angeordnet sind, wobei vorzugsweise für jede Richtung eine eigene Faserlage vorgesehen ist. Um Verstärkungsfasern in unterschiedlichen Richtungen anzuordnen, kann man auch mehrere unidirektionale Prepregs übereinander anordnen und durch die Ausrichtung der Prepregs eine entsprechende Richtung der Verstärkungsfasern vorgeben.

Die Verstärkungsfasern sind bei einem Prepreg mit einem Kunststoff vorimprägniert. Hierbei verwendet man vorzugsweise einen thermoplastischen Kunststoff, insbesondere Polyamid, beispielsweise PA6.

Für das Aufbringen der erhöhten Temperatur und des erhöhten Drucks verwendet man beispielsweise eine Membran, die einen Öldruckraum begrenzt. In den Öldruckraum kann man dann beispielsweise Öl mit erhöhter Temperatur, beispielsweise in einem Bereich von 350° C bis 410° C, einspeisen. Man kann das Öl auch beispielsweise dazu verwenden, die Temperatur nach dem Aufheizen wieder abzusenken, indem man beispielsweise die Temperatur des Öls auf einen Temperaturbereich von beispielsweise 20° bis 40° C, insbesondere 30° C abkühlt.

Das Einlegen der Prepregs kann man beispielsweise mit Hilfe von Tape-Layern vornehmen.

Die Aufgabe wird bei einer Vorrichtung mit den Merkmalen des Anspruchs 11 gelöst.

Die Spanneinrichtung wirkt über den Kern auf das Verstärkungselement und drückt das Verstärkungselement gegen die Wand der Ausnehmung. Damit wird verhindert, dass sich das Verstärkungselement über ein gewisses Maß hinaus verformen kann.

Vorzugsweise wirkt die Spanneinrichtung über die Länge des Kerns auf den Kern. Das zu erzeugende Bauelement kann eine relativ große Länge haben. Wenn die Spanneinrichtung über die Länge des Kerns auf den Kern wirkt, kann man über die große Länge eine gleichmäßige oder annähernd gleichmäßige Spannkraft aufrechterhalten.

Vorzugsweise ist die Spanneinrichtung in der Ausnehmung festgelegt. Damit ergeben sich definierte Angriffspunkte der Kraft auf den Kern, so dass man die auf das Verstärkungselement wirkende Spannkraft definiert einstellen kann.

Vorzugsweise weist die Spanneinrichtung eine erste Geometrie und die Ausnehmung eine zweite Geometrie auf, wobei die erste Geometrie und die zweite Geometrie aneinander angepasst sind und die Position der Spanneinrichtung in der Ausnehmung definieren. Die Position wird also geometrisch definiert, was eine relativ einfache Möglichkeit ist, um die Position der Spanneinrichtung in der Ausnehmung auch bei höheren Drücken festzulegen.

Hierbei ist bevorzugt, dass mindestens eine der Geometrien eine Vertiefung aufweist, in der die andere Geometrie zumindest teilweise angeordnet ist. Die andere Geometrie kann dann eine gewisse Länge in eine Richtung senkrecht zum Kern aufweisen, so dass sie in ausreichendem Maße geführt ist.

Vorzugsweise weist die Spanneinrichtung mindestens ein Federelement auf. Wenn das Federelement zusammengedrückt wird, erzeugt es eine Gegenkraft, die dann als Spannkraft auf den Kern wirkt.

Vorzugsweise ist das Federelement zwischen der Form und dem Kern angeordnet. Dies ist eine relativ einfache Möglichkeit, um das Federelement zu positionieren.

Vorzugsweise ist das Federelement als textiles Material aus einem hitzebeständigen Werkstoff gebildet. Wie oben ausgeführt, kann das textile Material ein Gewebe, ein Gewirke, ein Vlies oder einfach ein "Knäuel" von metallischen Fäden oder Fäden aus einem anderen elastischen und hitzebeständigen Werkstoff sein. Das textile Material wird zusammengepresst, wenn es mit Druck beaufschlagt wird. Da das textile Material aber über eine gewisse Federeigenschaft verfügt, wird bei diesem Zusammendrücken eine Reaktionskraft erzeugt, die dann als Spannkraft auf den Kern wirkt.

Alternativ dazu kann das Federelement als Blatt-, Wellen- oder Tellerfeder ausgebildet sein. Es ist auch möglich, mehrere unterschiedliche Arten von Federn miteinander zu kombinieren.

Vorzugsweise weist die Spanneinrichtung mehrere Federelemente auf, die über die Länge des Kerns verteilt angeordnet sind. Damit lässt sich die Spannkraft über die Länge des Kerns gleichmäßig aufrechterhalten.

Die Erfindung wird im Folgenden anhand eines bevorzugten Ausführungsbeispiels in Verbindung mit der Zeichnung beschrieben. Hierin zeigt die einzige Fig. eine schematische Darstellung eines Verfahrens zum Erzeugen eines Bauelements eines Luft-, Land- oder Wasserfahrzeugs.

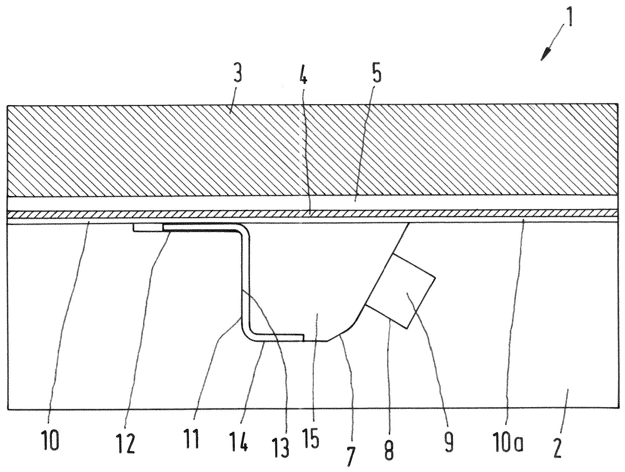

Fig. 1 zeigt schematisch eine Form zum Erzeugen eines Bauelements eines Luft-, Land- oder Wasserfahrzeugs. Die Form 1 weist hier ein Unterwerkzeug 2 und ein Oberwerkzeug 3 auf. Zwischen dem Unterwerkzeug 2 und dem Oberwerkzeug 3 ist eine Membran 4 angeordnet, die einen Öldruckraum 5 begrenzt.

Der Öldruckraum 5 wird mit einem Öl gefüllt, das einen erhöhten Druck und eine erhöhte Temperatur aufweist und dadurch einen Teil einer Presskrafterzeugungseinrichtung bildet.

Das Öl kann beispielsweise eine Temperatur im Bereich von 350° C bis 400° C haben, wenn die erhöhte Temperatur gewünscht ist. Nach dem Pressen, also nach der Druckbeaufschlagung kann eine Absenkung der Temperatur auf etwa 30° C erfolgen.

Die Membran 4 kann auf der dem Unterwerkzeug 2 zugewandten Seite relativ glatt sein und einen R_{z}- Wert von weniger als 0,1 µm aufweisen.

Die Druck- und die Temperaturkurve für das Öl im Öldruckraum 5 sollten möglichst parallel ansteigen und wieder abklingen.

Das Unterwerkzeug weist Anlagefläche mit einer Ausnehmung 7 auf. Die Ausnehmung 7 weist eine Vertiefung 8 auf, in der eine nur schematisch dargestellte Spanneinrichtung 9 angeordnet ist.

Zur Erzeugung des Bauelements wird eine Anordnung 10 aus Fasern und Kunststoff in das Unterwerkzeug 2 eingelegt. Diese Anordnung 10 bildet nach dem Beaufschlagen mit erhöhter Temperatur und erhöhtem Druck eine Haut 10a des Bauelements. Diese Haut 10a soll durch ein Verstärkungselement 11 verstärkt werden, das vor dem Beaufschlagen der Anordnung 10 aus Fasern und Kunststoff ebenfalls in die Ausnehmung 7 eingelegt wird.

Bei der Anordnung 10 aus Fasern und Kunststoff handelt es sich vorzugsweise um ein oder mehrere Prepregs, d.h. Fasern aus Kohlestoff (Kohlefasern) oder anderen hoch zugfesten Fasern, die mit einem Kunststoff, vorzugsweise einem thermoplastischen Kunststoff, insbesondere Polyamid, z.B. PA6 versehen sind. Das Verstärkungselement 11 kann aus den gleichen Materialien gebildet sein.

Die Fasern der Prepregs können unidirektional angeordnet sein, also alle in die gleiche Richtung verlaufen. Es ist aber auch möglich, Prepregs zu verwenden, bei denen mehrere Faserschichten vorhanden sind, deren Fasern in unterschiedliche Richtungen verlaufen. Man kann auch unidirektionale Prepregs verwenden, also Prepregs, bei denen alle Fasern in die gleiche Richtung verlaufen, und mehrere derartige Prepregs in unterschiedlichen Richtungen im Unterwerkzeug 2 anordnen. Die Faserrichtung richtet sich nach der später gewünschten Belastbarkeit der Haut 10a. Beispielsweise kann man aus der Haut 10a einen Rumpf oder eine Kabine eines Luft-, Land- oder Wasserfahrzeugs herstellen.

Die Form 1 ist hier schematisch so dargestellt, dass die Haut 10a eine im Wesentlichen ebene Ausbildung ist. Man kann aber die Form 1 auch so ausgestalten, dass zumindest leicht abgerundete Formen herstellbar sind, z.B. für eine Motorhaube. Auch ist eine Form 1 für schalenförmige Bauelemente ohne weiteres verwendbar.

Die oben genannten Prepregs können von Hand oder von Tape-Layern in die Form 1 eingelegt werden. Die Dicke der Haut 10a kann dadurch eingestellt werden, dass man mehr oder weniger Prepregs verwendet.

Das Verstärkungselement 11, das auch als "Stringer" bezeichnet wird, ist im vorliegenden Fall Z-förmig ausgebildet. Das Verstärkungselement weist einen ersten Schenkel 12 auf, der an der Anordnung 10 aus Fasern und Kunststoff anliegt. Das Verstärkungselement 11 weist einen Steg 13 auf, der sich im Wesentlichen senkrecht zur Anordnung 10 aus Fasern und Kunststoff erstreckt. Am von der Anordnung 10 abgewandten Ende des Steges 13 ist ein weiterer Schenkel 14 angeordnet, der sich dann wieder etwa parallel zur Anordnung 10 aus Fasern und Kunststoff erstreckt.

Ein Kern 15 ist gemeinsam mit dem Verstärkungselement 11 in die Ausnehmung 7 eingelegt. Die oben genannte Spanneinrichtung 9 wirkt auf den Kern 15 und belastet ihn mit einer Komponente senkrecht zum Steg 13 und einer kleineren Komponente senkrecht zur Anordnung 10 aus Fasern und Kunststoff.

Das Verstärkungselement 11 wird vielfach in Form eines Halbzeugs verwendet, wobei hier relativ große Toleranzen vorliegen. Mehrere Verstärkungselemente 11 können sich durchaus in ihren Außenabmessungen um mehrere Prozent unterscheiden.

Wenn nun die Anordnung 10 mit erhöhtem Druck und erhöhter Temperatur beaufschlagt wird, dann wird auch das Verstärkungselement 11 erhitzt, was dazu führen kann, dass es nicht mehr formstabil bleibt, sondern fließfähig wird.

Um eine Verformung des Verstärkungselements 11 zu vermeiden oder in gewissen, vorgegebenen Grenzen zu halten, ist der Kern 15 vorgesehen. Dieser Kern 15 ist aufgrund der Beaufschlagung durch die Spanneinrichtung 9 in der Lage, die oben angegebenen Toleranzen auszugleichen. Der Kern 15 kann beispielsweise so an die Ausnehmung 7 angepasst sein, dass der verbleibende- Freiraum das größte Verstärkungselement 11 noch aufnehmen kann. Wenn ein anderes Verstärkungselement 11 geringfügig kleiner ist, ist dies problemlos möglich, weil der Kern 15 durch die Spanneinrichtung 9 dann so mit einer Spannkraft beaufschlagt wird, dass er eine unzulässige Verformung des Verstärkungselements 11 nach wie vor verhindern kann.

Durch die Vertiefung 8 in der Ausnehmung 7 ist die Spanneinrichtung 9 positionsmäßig in der Ausnehmung 7 festgelegt. Die Spanneinrichtung 9 weist einen Umfang auf, der an den Umfang der Vertiefung angepasst ist. Eine exakte Übereinstimmung ist allerdings nicht erforderlich.

Die Spanneinrichtung 9 kann als Federelement ausgebildet sein, das zwischen der Form, genauer gesagt dem Unterwerkzeug 2, und dem Kern 15 angeordnet ist.

Für die Ausbildung eines derartigen Federelements gibt es verschiedene Möglichkeiten. Eine Möglichkeit besteht darin, dass das Federelement als textiles Material aus einem hitzebeständigen Werkstoff ausgebildet ist. Als textiles Material wird hierbei ein Gewebe, ein Gewirke oder ein Vlies aus metallischen Fäden angesehen. Anstelle von metallischen Fäden kann man auch Fäden oder Filamente eines anderen elastischen und hoch temperaturbeständigen Werkstoffs verwenden. Es ist auch möglich, die Fäden oder Filamente einfach als "Knäuel" anzuordnen.

Es ist natürlich auch möglich, ein "klassisches" Federelement zu verwenden, das als Blatt-, Wellen- oder Tellerfeder ausgebildet ist. Man kann auch unterschiedliche Arten von Federelementen gemeinsam verwenden.

Man kann sowohl ein über die Länge des Kerns 15 durchgehendes Federelement verwenden, als auch mehrere einzelne Federelemente, die über eine Länge des Kerns verteilt angeordnet sind.

## Patentansprüche

1. Verfahren zum Erzeugen eines Bauelements, insbesondere eines Luft-, Land- oder Wasserfahrzeugs oder eines Rotorblatts einer Windenergieanlage, bei dem man eine Anordnung (10) aus Fasern und Kunststoff in eine Form (1) einlegt und mit Hilfe von Öl, das in einen durch eine Membran (4) begrenzten Öldruckraum (5) gefüllt wird, mit erhöhtem Druck und erhöhter Temperatur beaufschlagt, wobei man eine Form (1) verwendet, die mindestens eine Ausnehmung (7) aufweist, in der man ein Verstärkungselement (11) anordnet, wobei man das Verstärkungselement (11) vor oder bei dem Beaufschlagen mit erhöhtem Druck und erhöhter Temperatur in der Ausnehmung (7) verspannt.

2. Verfahren nach Anspruch 1, **dadurch gekennzeichnet, dass** man das Verstärkungselement (11) und einen Kern (15) in die Ausnehmung (7) einlegt, wobei man eine Form (1) verwendet, die einen auf den Kern (15) wirkende Spanneinrichtung (9) aufweist.

3. Verfahren nach Anspruch 2, **dadurch gekennzeichnet, dass** man eine Spanneinrichtung (9) verwendet, die über die Länge des Kerns auf den Kern (15) wirkt.

4. Verfahren nach Anspruch 2 oder 3, **dadurch gekennzeichnet, dass** man eine Spanneinrichtung (9) verwendet, deren Position in der Ausnehmung (7) festgelegt ist.

5. Verfahren nach Anspruch 4, **dadurch gekennzeichnet, dass** man eine Spanneinrichtung (9) mit einer ersten Geometrie und eine Ausnehmung (7) mit einer zweiten Geometrie verwendet, wobei die erste Geometrie und die zweite Geometrie aneinander angepasst sind und die Position der Spanneinrichtung (9) in der Ausnehmung (7) definieren.

6. Verfahren nach Anspruch 5, **dadurch gekennzeichnet, dass** zumindest eine der beiden Geometrien eine Vertiefung (8) aufweist, in der die andere Geometrie zumindest teilweise angeordnet ist.

7. Verfahren nach einem der Ansprüche 2 bis 6, **dadurch gekennzeichnet, dass** man als Spanneinrichtung (9) mindestens ein Federelement verwendet, das zwischen der Form (1) und dem Kern (11) angeordnet ist.

8. Verfahren nach Anspruch 7, **dadurch gekennzeichnet, dass** das Federelement als textiles Material aus einem hitzebeständigen Werkstoff ausgebildet ist.

9. Verfahren nach Anspruch 7, **dadurch gekennzeichnet, dass** das Federelement als Blatt-, Wellen- oder Tellerfeder ausgebildet ist.

10. Verfahren nach einem der Ansprüche 7 bis 9, **dadurch gekennzeichnet, dass** man eine Spanneinrichtung (9) mit mehreren Federelementen verwendet, die über die Länge des Kerns (15) verteilt angeordnet sind.

11. Vorrichtung zum Erzeugen eines Bauelements, insbesondere eines Luft-, Land- oder Wasserfahrzeugs oder eines Rotorblatts einer Windenergieanlage, mit einer Form (1), die eine Anlagefläche und eine Ausnehmung (7) in der Anlagefläche aufweist, wobei der Anlagefläche benachbart eine einen durch eine Membran (4) begrenzten und mit einem einen erhöhten Druck und eine erhöhte Temperatur aufweisendes Öl gefüllten Öldruckraum (5) aufweisende Presskrafterzeugungseinrichtung angeordnet ist, wobei in der Ausnehmung (7) ein Kern (15) und eine auf den Kern (15) wirkende Spanneinrichtung (9) angeordnet ist.

12. Vorrichtung nach Anspruch 11, **dadurch gekennzeichnet, dass** die Spanneinrichtung über die Länge des Kerns auf den Kern wirkt.

13. Vorrichtung nach Anspruch 11 oder 12, **dadurch gekennzeichnet, dass** die Spanneinrichtung (9) in der Ausnehmung (7) festgelegt ist.

14. Vorrichtung nach Anspruch 13, **dadurch gekennzeichnet, dass** die Spanneinrichtung (9) eine erste Geometrie und die Ausnehmung (7) eine zweite Geometrie aufweist, wobei die erste Geometrie und die zweite Geometrie aneinander angepasst sind und die Position der Spaneinrichtung (9) in der Ausnehmung (7) definieren.

15. Vorrichtung nach Anspruch 14, **dadurch gekennzeichnet, dass** das mindestens eine der Geometrien eine Vertiefung (8) aufweist, in der die andere Geometrie zumindest teilweise angeordnet ist.

16. Vorrichtung nach einem der Ansprüche 11 bis 15, **dadurch gekennzeichnet, dass** die Spanneinrichtung (9) mindestens ein Federelement aufweist.

17. Vorrichtung nach Anspruch 16, **dadurch gekennzeichnet, dass** das Federelement zwischen der Form (1) und dem Kern (15) angeordnet ist.

18. Vorrichtung nach Anspruch 16 oder 17, **dadurch gekennzeichnet, dass** das Federelement als textiles Material aus einem hitzebeständigen Werkstoff gebildet ist.

19. Vorrichtung nach Anspruch 16 oder 17, **dadurch gekennzeichnet, dass** das Federelement als Blatt-, Wellen- oder Tellerfeder ausgebildet ist.

20. Vorrichtung nach einem der Ansprüche 16 bis 19, **dadurch gekennzeichnet, dass** die Spanneinrichtung (9) mehrere Federelemente aufweist, die über die Länge des Kerns (15) verteilt angeordnet sind.

## Claims

1. Method for producing a component, in particular an aircraft blade, land vehicle blade, watercraft blade or rotor blade for a wind turbine, in which an arrangement (10) of fibres and plastic is placed in a mould (1) and subjected to increased pressure and temperature with the aid of oil which is filled into an oil pressure chamber (5) bounded by a membrane (4), wherein a mould (1) is used which has at least one recess (7) in which a reinforcing element (11) is arranged, wherein the reinforcing element (11) is clamped in the recess (7) before or during the application of increased pressure and increased temperature.

2. Method according to claim 1, **characterized in that** the reinforcing element (11) and a core (15) are inserted into the recess (7), using a mould (1) which has a clamping device (9) acting on the core (15).

3. Method according to claim 2, **characterized in that** a clamping device (9) is used which acts on the core (15) over the length of the core.

4. Method according to claim 2 or 3, **characterized in that** a clamping device (9) is used whose position in the recess (7) is fixed.

5. Method according to claim 4, **characterized in that** a clamping device (9) with a first geometry and a recess (7) with a second geometry are used, wherein the first geometry and the second geometry are adapted to each other and define the position of the clamping device (9) in the recess (7).

6. Method according to claim 5, **characterized in that** at least one of the two geometries has a recess (8) in which the other geometry is at least partially arranged.

7. Method according to one of claims 2 to 6, **characterized in that** at least one spring element arranged between the mould (1) and the core (11) is used as the clamping device (9).

8. Method according to claim 7, **characterized in that** the spring element is designed as a textile material made of a heat-resistant material.

9. Method according to claim 7, **characterized in that** the spring element is designed as a leaf spring, wave spring or disc spring.

10. Method according to one of claims 7 to 9, **characterized in that** a clamping device (9) with several spring elements is used, which are distributed over the length of the core (15).

11. Device for producing a structural element, in particular an aircraft blade, land vehicle blade or watercraft blade or a rotor blade of a wind turbine, with a mould (1) which has a contact surface and a recess (7) in the contact surface, wherein a pressing force generating device having an oil pressure chamber (5) bounded by a membrane (4) and filled with oil having an elevated pressure and an elevated temperature is arranged adjacent to the contact surface, wherein a core (15) and a clamping device (9) acting on the core (15) are arranged in the recess (7).

12. Device according to claim 11, **characterized in that** the clamping device acts on the core over the length of the core.

13. Device according to claim 11 or 12, **characterized in that** the clamping device (9) is fixed in the recess (7).

14. Device according to claim 13, **characterized in that** the clamping device (9) has a first geometry and the recess (7) has a second geometry, wherein the first geometry and the second geometry are adapted to each other and define the position of the clamping device (9) in the recess (7).

15. Device according to claim 14, **characterized in that** at least one of the geometries has a recess (8) in which the other geometry is at least partially arranged.

16. Device according to one of claims 11 to 15, **characterized in that** the clamping device (9) has at least one spring element.

17. Device according to claim 16, **characterized in that** the spring element is arranged between the mould (1) and the core (15).

18. Device according to claim 16 or 17, **characterized in that** the spring element is formed as a textile material made of a heat-resistant material.

19. Device according to claim 16 or 17, **characterized in that** the spring element is designed as a leaf spring, wave spring or disc spring.

20. Device according to one of claims 16 to 19, **characterized in that** the clamping device (9) has several spring elements which are distributed over the length of the core (15).

## Revendications

1. Procédé de production d'un élément structural, en particulier d'un aéronef, d'un véhicule terrestre ou d'un bateau ou d'une pale de rotor d'une installation d'énergie éolienne, pour lequel on insère dans un moule (1) et on sollicite avec une pression élevée et une température élevée à l'aide d'huile, qui remplit un compartiment sous pression d'huile (5) délimité par une membrane (4), un agencement (10) composé de fibres et de matière plastique, sachant qu'on utilise un moule (1), qui comporte au moins un évidement (7) dans lequel on dispose un élément de renfort (11), sachant que l'on serre l'élément de renfort (11) dans l'évidement (7) avant ou lors de la sollicitation avec une pression élevée et une température élevée.

2. Procédé selon la revendication 1, **caractérisé en ce que** l'on insère l'élément de renfort (11) et un noyau (15) dans l'évidement (7), sachant qu'on utilise un moule (1), qui comporte un système de serrage (9) agissant sur le noyau (15).

3. Procédé selon la revendication 2, **caractérisé en ce qu'**on utilise un système de serrage (9), qui agit sur le noyau (15) sur la longueur du noyau.

4. Procédé selon la revendication 2 ou 3, **caractérisé en ce qu'**on utilise un système de serrage (9) dont la position est fixée dans l'évidement (7).

5. Procédé selon la revendication 4, **caractérisé en ce qu'**on utilise un système de serrage (9) avec une première géométrie et un évidement (7) avec une deuxième géométrie, sachant que la première géométrie et la deuxième géométrie sont adaptées l'une à l'autre et définissent la position du système de serrage (9) dans l'évidement (7).

6. Procédé selon la revendication 5, **caractérisé en ce qu'**au moins une des deux géométries comporte une cavité (8) dans laquelle est disposée au moins en partie l'autre géométrie.

7. Procédé selon l'une quelconque des revendications 2 à 6, **caractérisé en ce qu'**on utilise au moins un élément faisant ressort en tant que système de serrage (9), qui est disposé entre le moule (1) et le noyau (11).

8. Procédé selon la revendication 7, **caractérisé en ce que** l'élément faisant ressort est formé sous la forme d'un matériau textile composé d'une matière thermorésistante.

9. Procédé selon la revendication 7, **caractérisé en ce que** l'élément faisant ressort est constitué sous la forme d'un ressort à lame, en zigzag ou d'un ressort Belleville.

10. Procédé selon l'une quelconque des revendications 7 à 9, **caractérisé en ce qu'**on utilise un système de serrage (9) avec plusieurs éléments faisant ressort, qui sont disposés répartis sur la longueur du noyau (15).

11. Dispositif de production d'un élément structural, en particulier d'un aéronef, d'un véhicule terrestre ou d'un bateau ou d'une pale de rotor d'une installation d'énergie éolienne avec un moule (1), qui comporte une surface d'appui et un évidement (7) dans la surface d'appui, sachant que près de la surface d'appui est disposé un système de production de force de compression délimité par une membrane (4) et comportant un compartiment sous pression d'huile (5) rempli d'huile à une pression élevée et une température élevée, sachant que dans l'évidement (7) est disposé un noyau (15) et un système de serrage (9) agissant sur le noyau (15).

12. Dispositif selon la revendication 11, **caractérisé en ce que** le système de serrage agit sur le noyau sur la longueur du noyau.

13. Dispositif selon la revendication 11 ou 12, **caractérisé en ce que** le système de serrage (9) est fixé dans l'évidement (7).

14. Dispositif selon la revendication 13, **caractérisé en ce que** le système de serrage (9) comporte une première géométrie et l'évidement (7) une deuxième géométrie, sachant que la première géométrie et la deuxième géométrie sont adaptées l'une à l'autre et définissent la position du système de serrage (9) dans l'évidement (7).

15. Dispositif selon la revendication 14, **caractérisé en ce qu'**au moins une des géométries comporte une cavité (8) dans laquelle est disposée au moins en partie l'autre géométrie.

16. Dispositif selon l'une quelconque des revendications 11 à 15, **caractérisé en ce que** le système de serrage (9) comporte au moins un élément faisant ressort.

17. Dispositif selon la revendication 16, **caractérisé en ce que** l'élément faisant ressort est disposé entre le moule (1) et le noyau (15).

18. Dispositif selon la revendication 16 ou 17, **caractérisé en ce que** l'élément faisant ressort est formé sous la forme d'un matériau textile composé d'une matière thermorésistante.

19. Dispositif selon la revendication 16 ou 17, **caractérisé en ce que** l'élément faisant ressort est constitué sous la forme d'un ressort à lame, en zigzag ou d'un ressort Belleville.

20. Dispositif selon l'une quelconque des revendications 16 à 19, **caractérisé en ce que** le système de serrage (9) comporte plusieurs éléments faisant ressort, qui sont disposés répartis sur la longueur du noyau (15).
